# EUROPÄISCHE PATENTANMELDUNG

(11) **EP 1 719 870 A2**
(43) Veröffentlichungstag der Anmeldung: **08.11.2006**
(21) Anmeldenummer: 06405186.5
(22) Anmeldetag: 27.04.2006
(51) Int. Cl.: E06B 7/20

(54) **Türe mit einer Türdichtung**

(30) Priorität: 02.05.2005 CH 7682005
(71) Anmelder: Planet GDZ AG, 8309 Nürensdorf (CH)
(72) Erfinder: Dintheer, Andreas, 8309 Nürensdorf (CH)
(74) Vertreter: Clerc, Natalia

(57) **Zusammenfassung**

Eine Tür weist eine untere Türdichtung (1) und eine obere Türdichtung (2) auf, welche je eine den Raum zwischen Spalt (S_{B} oder S_{D}) und Boden bzw. Decke verschliessende Dichtleiste (13, 23) besitzen. Diese Dichtleisten (13, 23) sind beim Schliessen der Tür (T) vorteilhafterweise automatisch absenkbar und verschliessen im geschlossenen Zustand der Tür (T) einen unteren Spalt (S_{B}) bzw. einen oberen Spalt (S_{D}) zwischen Türunterkante und Boden (B) bzw. Decke (D) möglichst schall- und luftdicht. Diese Tür ermöglicht eine moderne Bauweise, indem sich Türen bis zur oberen Raumdecke reichend ausbilden lassen und auch ohne obere Zarge oder einen Türsturz eine genügende Dichtung gewährleisten.

## Beschreibung

### Technisches Gebiet

Die Erfindung betrifft eine Türe mit einer Türdichtung gemäss Oberbegriff des Patentanspruchs 1.

### Stand der Technik

Eine gattungsgemässe Tür mit einer unteren Türdichtung ist in EP 0'338'974 offenbart. Die Türdichtung dichtet einen unteren Spalt zwischen der schwellenlosen Tür und dem Boden gegen Durchzug und Schall ab. Die Türdichtung wird mittels einer Betätigungsstange beim Schliessen der Tür automatisch aktiviert, wobei die Aktivierung rein mechanisch erfolgt.

Diese Türdichtung hat sich nun seit Jahren bewährt. Die architektonischen Bedürfnisse haben sich jedoch in den letzten Jahren weiterentwickelt. So geht im Moment der Trend hin zu Türen, welche sich möglichst über die gesamten Raumhöhe erstrecken. Um für derartige Türen eine genügende Dichtung zu gewährleisten, ist jedoch nach wie vor am oberen Ende ein kleiner Türsturz bzw. eine schmale Zarge notwendig. Wird gänzlich ohne obere Zarge gebaut, so besteht insbesondere bei ungenauer Bauweise die Gefahr, dass ein unerwünschter Spalt zwischen Decke und Tür übrigbleibt.

### Darstellung der Erfindung

Es ist deshalb eine Aufgabe der Erfindung, eine Tür zu schaffen, welche auch bei grossen Bautoleranzen eine genügende Dichtung gewährleistet.

Unter anderem ist es auch ein Ziel der Erfindung, eine Tür zu schaffen, die ohne Zarge im oberen Türbereich oder Deckenbereich auskommt. Es besteht bei einer solchen Tür kein Sturz, also kein oberer waagerechter Abschlussbalken.

Diese Aufgabe löst eine Tür mit den Merkmalen des Patentanspruchs 1 oder 2.

Gemeinsam ist der Lösung der Aufgabe, dass eine entsprechende erfindungsgemässe Tür eine untere Türdichtung und eine obere Türdichtung aufweist, welche je eine den Raum zwischen Spalt und Boden bzw. Decke verschliessende Dichtleiste besitzt.

Die erfindungsgemässe Türe weist nicht nur eine untere, sondern auch eine obere Türdichtung auf, welche beim Schliessen der Tür aktiviert wird. Dadurch lassen sich schwellenlose Türen bauen, welche keinen Türsturz mehr benötigen und bis zur Decke reichen können. Unebenheiten in der Decke bzw. Verzug der Türen lassen sich mittels der oberen Türdichtung kompensieren. Vorzugsweise weist die Tür somit nur noch seitliche Zargen auf.

Vorzugsweise sind die obere und untere Türdichtung identisch aufgebaut. Sie können sich jedoch auch beispielsweise in der Federkraft ihres Auslösemechanismus oder durch ihren Hub unterscheiden.

In einer bevorzugten Ausführungsform weist die Türe Dichtungen auf, wie sie in EP 0'338'974 beschrieben sind, wobei vorzugsweise ein Auslösemechanismus gemäss CH 688 741 benützt wird.

Weitere vorteilhafte Ausführungsformen gehen aus den abhängigen Patentansprüchen hervor.

Unter dem Begriff Tür wird, wie in den Zeichnungen dargestellt, zum einen eine übliche Flügeltür verstanden, das heisst eine Tür mit zumeist zwei oder drei Scharnieren, an der das Türblatt verschwenkbar befestigt ist. Zum anderen ist darunter aber auch eine in den Zeichnungen nicht gezeigte Schiebetür zu verstehen, bei der der Auslöseknopf für die Dichtungen oben und unten jeweils in der Schmalseite der Tür vorgesehen ist, der somit beim Schliessen der Tür durch Anstossen derselben an die gegenüberliegende Wand oder Zarge betätigt wird, indem er in seine Aufnahme in der Tür eingedrückt wird. Schliesslich wird unter Tür auch jede andere Öffnung in einer Höhe verstanden, die einen Durchgang versperrt.

### Kurze Beschreibung der Zeichnung

Im folgenden wird der Erfindungsgegenstand anhand eines bevorzugten Ausführungsbeispiels, welches in der beiliegenden Zeichnung dargestellt ist, erläutert. Es zeigen:
Figur 1 eine schematische Darstellung einer erfindungsgemässen Tür im Raum und
Figur 2 einen Querschnitt durch einen oberen und unteren Teil der Tür gemäss Figur 1.

### Wege zur Ausführung der Erfindung

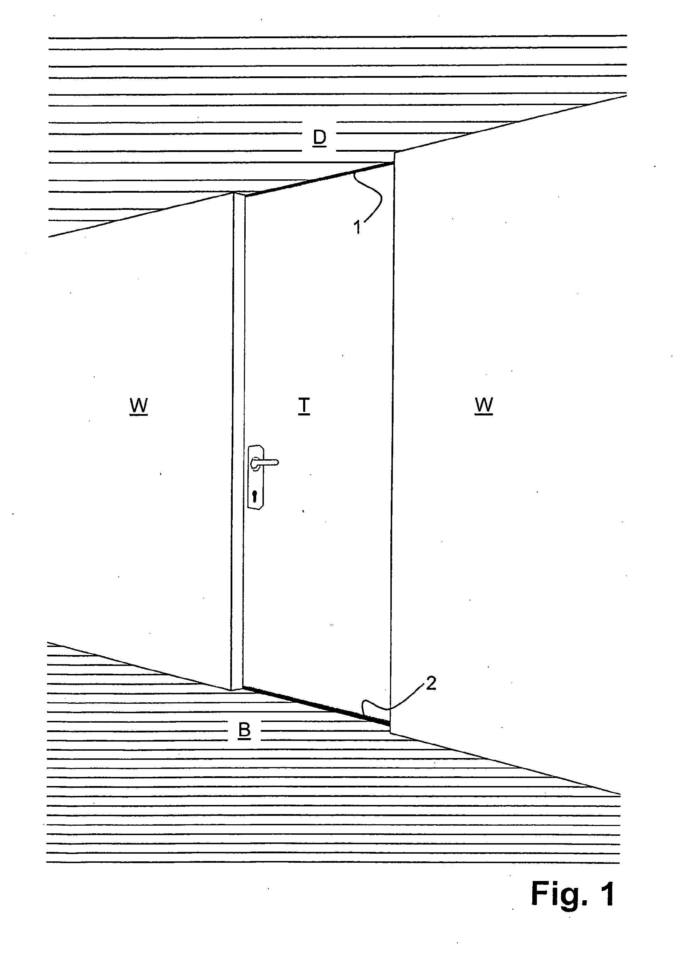

In Figur 1 ist eine erfindungsgemässe Tür T dargestellt. Sie ist in einer Wand W eingelassen und reicht von einem Boden B bis zu einer Decke D. Die Tür T ist schwellenlos ausgebildet und weist auch oben keine Zarge oder Türsturz auf. Somit sind lediglich seitliche Zargen vorhanden. Die Tür T ist mit einer oberen Türdichtung 1 und einer unteren Türdichtung 2 versehen, welche sich jeweils über die gesamte Breite der Tür T erstrecken.

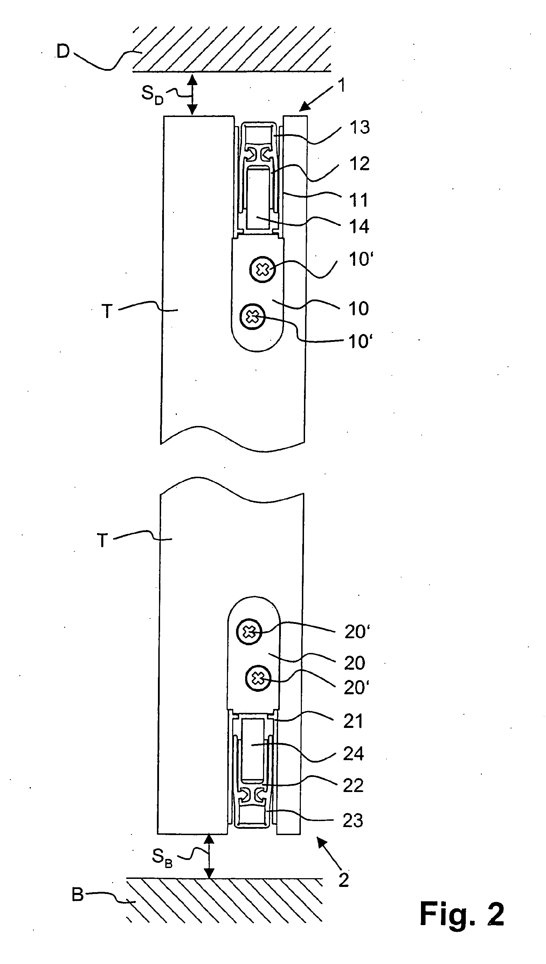

Diese zwei Türdichtungen 1, 2 sind in Figur 2 besser erkennbar. Es handelt sich um Türdichtungen, welche beim Schliessen der Tür T automatisch mittels mechanischen Mittel aktiviert werden und so einen Spalt S_{B} zwischen Türunterkante und Boden bzw. einen Spalt S_{D} zwischen Türoberkante und Decke möglichst schall- und luftdicht verschliessen. Vorzugsweise werden die dargestellten Türdichtungen verwendet.

Jede der Türdichtung 1, 2 ist in einer Nut in der Tür eingelassen, wobei sie beispielsweise mittels eines Befestigungswinkels 10, 20 und Befestigungsschrauben 10', 20' befestigt ist. Sie kann jedoch auch stoffschlüssig mit der Türkante verbunden sein, insbesondere kann sie aufgeklebt sein. Diese Verklebung kann auf den besagten Stirnseiten oder im Bereich der Stirnseiten vorgesehen sein, also auch ein schmales auf dem Türblatt angeordnetes Stützprofil umfassen.

Jede der zwei Türdichtungen 1, 2 weist eine äussere Führungsleiste 11, 21 auf, in welcher ein Dichtelement absenkbar und anhebbar gehalten ist. Der Absenkmechanismus, welcher hier nicht dargestellt ist, weist vorzugsweise eine der Führungsleiste 11, 21 mindestens einseitig vorstehende Betätigungsstange und eine oder mehrere mit der Betätigungsstange wirkverbundene Blattfedern auf, welche einerseits mit der Führungsleiste 11, 21 und andererseits mit dem Dichtelement verbunden sind. Beim Schliessen der Tür wird diese Stange zurückgedrängt und betätigt die obere bzw. die untere Türdichtung 1, 2.

Das Dichtelement weist eine Absenkleiste 12, 22 und mindestens eine daran befestigte Dichtleiste 13, 23 auf, welche im aktivierten Zustand der Dichtung der Führungsleiste 1 vorsteht, entgegen der Federkraft des Absenkmechanismus in diese Position gebracht und gegen den Boden bzw. die Decke gepresst wird. Das in Figur 2 dargestellte Dämpfungselement 14, 24 aus einem Filzmaterial verhindert ein Klappern der Dichtung, ist jedoch nicht zwingend notwendig.

Vorzugsweise sind die obere und untere Dichtung 1, 2 identisch ausgebildet. Es ist jedoch auch möglich, oben und unten verschiedene Typen von Dichtungen oder zumindest bezüglich ihrer Dichtwirkung verschieden stark eingestellte Dichtungen zu verwenden.

Anstelle von Absenk- und Anhebdichtungen wie nach der obigen Beschreibung können auch sogenannte Schleifdichtungen Verwendung finden. Dies bedeutet, dass an der Oberkante oder an der Unterkante des Türblattes eine beispielsweise kammartige Struktur befestigt ist, die in den Spalt zwischen Türblattunterkante bzw. Türblattoberkante und Boden bzw. Decke ragt und deren Spitzen einen geringen Abstand zu Boden und Decke einhalten bzw. diese eventuell punktuell berühren. Die Dichtwirkung wird im Zusammenspiel mit einer Boden- bzw. Deckenleiste erreicht, die zwischen den seitlichen Zargen einer Flügeltür angeordnet ist. Beim Schliessen der Tür gleiten die flexiblen kammartigen Elemente der Schleifdichtung auf die Bodenleiste bzw. Deckenleiste auf und schaffen so einen Verschluss zwischen Türblattkante und Boden bzw. Decke.

Die erfindungsgemässe Tür ermöglicht eine moderne Bauweise, indem sich Türen bis zur oberen Raumdecke reichend ausbilden lassen und auch ohne obere Zarge oder einen Türsturz eine genügende Dichtung gewährleisten.

### Bezugszeichenliste

- D: Decke
- W: Wand
- T: Tür
- B: Boden
- S_{D}: Spalt zur Decke
- S_{B}: Spalt zum Boden
- 1: obere Türdichtung
- 10: oberer Befestigungswinkel
- 10': obere Befestigungsschraube
- 11: obere Führungsschiene
- 12: obere Absenkleiste
- 13: obere Dichtleiste
- 14: oberes Dämpfungselement
- 2: untere Türdichtung
- 20: unterer Befestigungswinkel
- 20': untere Befestigungsschraube
- 21: untere Führungsschiene
- 22: untere Absenkleiste
- 23: untere Dichtleiste
- 24: unteres Dämpfungselement

## Patentansprüche

1. Tür mit einer unteren Türdichtung (1), wobei die untere Türdichtung (1) eine absenkbare untere Dichtleiste (13) aufweist, welche beim Schliessen der Tür (T) automatisch absenkbar ist und welche im geschlossenen Zustand der Tür (T) einen unteren Spalt (S_{B}) zwischen Türunterkante und Boden (B) dichtend verschliesst, **dadurch gekennzeichnet, dass** die Tür (T) eine obere Türdichtung (2) aufweist, welche eine anhebbare obere Dichtleiste (23) aufweist, welche beim Schliessen der Tür (T) automatisch anhebbar ist und welche im geschlossenen Zustand der Tür (T) einen oberen Spalt (S_{D}) zwischen Türoberkante und Decke (D) dichtend verschliesst.

2. Tür mit einer unteren Türdichtung (1), wobei die untere Türdichtung (1) eine im unteren Spalt (S_{B}) zwischen Türunterkante und Boden (B) vorgesehene Dichteinrichtung und eine auf dem Boden montierbare Bodenleiste aufweist, welche Dichteinrichtung im geschlossenen Zustand der Tür (T) den unteren Spalt (S_{B}) zwischen Türunterkante und der Bodenleiste auf dem Boden (B) dichtend verschliesst, **dadurch gekennzeichnet, dass** die Tür (T) eine obere Türdichtung (2) aufweist, welche eine auf der Decke (D) montierbare Deckenleiste aufweist, welche Dichteinrichtung im geschlossenen Zustand der Tür (T) den oberen Spalt (S_{D}) zwischen Türoberkante und der Deckenleiste an der Decke (D) dichtend verschliesst,

3. Tür nach Anspruch 1, wobei die Tür (T) schwellenlos und die Decke (D) zargenlos ausgebildet ist.

4. Tür nach Anspruch 1 oder 3, wobei die obere und untere Dichtleiste (13, 23) an einer oberen bzw. unteren Absenkleiste (12, 22) befestigt ist und wobei die obere bzw. untere Dichtleiste (13, 23) entgegen einer Federkraft anhebbar bzw. absenkbar ausgebildet ist.

5. Tür nach Anspruch 4, wobei die Absenkleiste (12, 22) in einer Führungsleiste (11, 21) anhebbar bzw. absenkbar gehalten ist.

6. Tür nach einem der Ansprüche 1 bis 5, wobei die obere und untere Türdichtung (1, 2) identisch ausgebildet sind.

7. Tür nach einem der Ansprüche 1 bis 6, wobei die Tür (T) nur seitliche Zargen aufweist.

8. Tür nach Anspruch 1 oder 3 bis 5, wobei die obere und untere Türdichtung (1, 2) je eine Betätigungsstange aufweist, mittels welcher die Dichtleiste (13, 23) anhebbar bzw. absenkbar ist und wobei diese Betätigungsstangen seitlich vorstehen, um beim Schliessen der Tür (T) durch Zurückdrängung die obere bzw. die untere Türdichtung (1, 2) zu betätigen.

9. Tür nach einem der Ansprüche 1 bis 8, wobei die obere und untere Türdichtung (1, 2) in einer Nut der Tür (T) gehalten ist.

10. Tür nach einem der Ansprüche 1 bis 9, wobei die obere und untere Türdichtung (1, 2) auf oder im Bereich einer oberen bzw. unteren Stirnkante der Tür stoffschlüssig befestigt ist.
